# EUROPEAN PATENT APPLICATION

(11) **EP 4 826 954 A1**
(43) Date of publication of application: **21.10.2026**
(21) Application number: 26173189.7
(22) Date of filing: 17.04.2026
(51) Int. Cl.: H02J 7/47, G06F 21/32, H02J 7/42, H02J 7/70, H02J 7/80

(54) **CHARGING DEVICE**

(30) Priority: 17.04.2025 US 202519181917
(71) Applicant: McDaid, Ryan, F93K033 Donegal (IE)
(72) Inventor: McDaid, Ryan, F93K033 Donegal (IE)
(74) Representative: Sirius IP

(57) **Abstract**

The present invention discloses a charging device comprising a housing, a biometric sensor disposed at the housing that captures a biometric data of a user, and a light-emitting ring is positioned to encircle the sensor. A first connector extends from the housing is connected to an external power source. A cord extends from the housing and terminates with a second connector connected to a target device. A control device in communication with the first connecter, the light-emitting ring and the biometric sensor. The control device is configured to enable the user to register the biometric data. The control device is configured to enable the charging device to change between a lock state and an unlock state. The control device authenticates received biometric data by comparing the received biometric data with registered data. Upon authentication, the control device unlocks the charging device and supplies power to the target device.

## Description

### CROSS REFERENCE TO RELATED APPLICATION

The present application claims priority to the U.S. Patent Application No. 19/181,917, filed on April 17, 2025, with the entire content of application incorporated herein by reference.

### TECHNICAL FIELD

The present invention generally relates to a charger. More particular, the present invention relates to a charging device configured to control the supply of power to one or more connected target devices based on biometric data.

### BACKGROUND

Electronic devices, for example, Personal Digital Devices (PDDs) are often used for various functions including communication, data storage, entertainment, navigation, photography, online transactions, and health monitoring. The PDDs often require frequent charging due to high power consumption of the components used for various functions. Further, intensive usage of PDD for gaming and streaming along with background processes and temperature impacts could drain battery life.

The PDDs are typically recharged using a charger. However, situations often occur where multiple users need to share the charger. The presence of multiple users often results in situations where one user disconnects another's device to charge their own device. The frequent sharing of chargers raises concerns about theft or unauthorized use. Further, the users fear that another person might unplug the user's devices to use the charger for their own devices. As a result, users often feel the need to closely monitor the devices while charging to prevent unwanted disconnection or potential theft. Further, a few patent references related to the charger are discussed as follows.

CN116402499 of Yi Chaojin et al.*,* entitled "Intelligent charging pile settlement system applying biological recognition technology" discloses a system that provides an intelligent charging pile settlement system that utilizes biological recognition technology to manage access and usage of charging piles. The system first confirms whether a first user is allowed to use a current charging pile by implementing a recognition step based on the biological characteristics of the first user. Once the first identification step is completed, the system unlocks the charging gun on the charging pile implementing a second identification step for the first user so as to perform charging operation on the automobile. Further, a second user except the first user adds the first user into a queuing queue of the charging pile by performing a first identification step. The system is further configured to calculate the additional charging operation and the corresponding expense. The additional charges are calculated when there is additional occupation of the charging pile after the first user's automobile is fully charged. The calculated additional expense is then compensated by the first user to the second user as compensation for the waiting time during the additional occupation period.

US10873195 of Emory Todd et al.*,* entitled "Apparatus, method, and system for securely charging mobile devices" discloses a system for charging a mobile communication device comprises a mobile communication device, a power source, a cord; and a mobile communication device charger. The mobile communication device charger comprises one or more body housing battery charging elements, a power connector, and a mobile device connector. The mobile communication device charger is coupled to the power source and the mobile communication device is coupled to the mobile communication device charger via the cord. The mobile communication device charger is configured to receive an electrical power from the power source using an authorization code. The mobile communication device charger is further configured to validate the authorization code by performing a comparison between the authorization code and a stored authorization code stored in a memory following the receipt of the authorization code from the power source, the mobile communication device charger is configured to supply power to the mobile communication device when the authorization code matches the stored authorization code and is configured not to supply power to the mobile communication device when the authorization code does not match the stored authorization code. The authorization code is supplied based on at least one of an indication that a user associated with the mobile communication device charger has paid for a subscription or an indication that the user associated with the mobile communication device charger has paid a charging fee.

However, the existing system fails to ensure secure access to the charger as the user relies on the authorization code. The authorization code could be vulnerable to interception, theft, or guessed by the individuals. An unauthorized user could utilize stolen or shared code to gain access to the charger without permission. Further, the system requires users to remember and manually enter the authorization code each time to access the charger to charge the device. The manual entry of the code could lead to frustration, and delays in accessing the charger.

Therefore, there is a need for an assembly that ensures secure access to the charger without relying on the authorization code. The assembly needs to be capable of protecting the charger against theft. The system needs to prevent unauthorized users from accessing the charger. Further, the system needs to be easily accessible to users for charging their devices.

### SUMMARY

The present invention discloses a charging device. The charging device comprises a housing. Further, the housing comprises at least one aperture. The housing is made of at least one fire-retardant polycarbonate (PC) material, and a blend of a polycarbonate (PC) material and an acrylonitrile-butadiene-styrene material. The charging device further comprises one or more biometric sensors. The biometric sensor disposed at an upper portion of the housing. In one embodiment, the biometric sensor is disposed within the aperture. The biometric sensor comprises a fingerprint sensor, at least one of a capacitive sensor, and an optical sensor.

The biometric sensor is configured to capture at least one biometric data of at least one user. The biometric data includes at least one of fingerprint data, voice data, and facial data. The charging device further comprises a microphone and/ the speaker. The microphone or the speaker is configured to capture voice data. The biometric sensor comprises an integrated Electrostatic Discharge (ESD) protection module configured to safeguard the sensor from electrostatic discharges. Further, the biometric sensor is sealed using a gasket.

The charging device further comprises at least one light-emitting ring configured to encircle the biometric sensor. The light-emitting ring comprises one or more light-emitting diodes. Further, the light-emitting ring is configured to emit one or more light patterns. The light-emitting ring is configured to emit a different light color, or a different light pattern to indicate different states of the charging device. The states of the charging device include unlock state, lock state, charging state, reset of the charging device, and registration of the user.

The first connector extends from the housing. Further, the first connector is configured to connect to an external power source. The first connector is a modular, exchangeable plug component is configured to accommodate different regional plug standards. The modular, exchangeable plug piece is detachably connected to the housing. The charging device further comprises a cord that extends from the housing and terminates with a second connector. The second connector integrated with the biometric sensor, is configured to connect to at least one target device. The charging device further comprises a cord grip that connects the housing to the cord. The cord grip extends over at least a portion of the cord.

The charging device further comprises at least one interface configured to facilitate firmware updates of the charging device. The charging device is configured to support multiple charging protocols, including at least one of standard power delivery protocols, fast charging protocols, or adaptive charging protocols.

The charging device further comprises a control device in communication with the first connecter, the light-emitting ring, and the biometric sensor. The control device comprises one or more electronic components comprising an alternating current (AC) to direct current (DC) conversion component, a sensor controller, an electromagnetic Interference (EMI) filter, a thermal management module including one or more thermal pads, an Internet of things (IoT) component, a wireless fidelity (Wi-Fi), and a Bluetooth.

The control device further comprises a printed circuit board (PCB) assembly. The printed circuit board (PCB) assembly comprises one or more high-voltage components and one or more low-voltage components. The high-voltage components are configured to perform input power conversion. The low-voltage components are configured to perform power output regulation, charging protocol management, and management of the biometric sensors and light-emitting ring.

The control device is configured to enable at least one user to register the biometric data. The registered biometric data is stored in a memory of the control device. The steps involved in registering biometric data are as follows. The control device enables the user to apply a fingerprint for a first predefined number of times for a predetermined duration each time. Further, the control device enables the light-emitting ring to flash a first color to confirm successful registration and returns to a second color for each new print. Upon successfully registering the fingerprint, the control device enables the light-emitting ring to emit at least one light pattern. Subsequently, the light-emitting ring turns to a third color indicating the device is ready to charge.

The control device is further configured to enable the charging device to change between a lock state and an unlock state. During the unlock state, the control device enables the charging device to supply power to the target device from the external power source. During the lock state, the control device prevents the charging device from supplying power to the target device. The control device is further configured to receive the biometric data of the user to enable the charging device to operate in the unlock state. The control device is further configured to compare the received biometric data with the registered biometric data to authenticate the received biometric data. Upon authentication of the received biometric data, the charging device is changed to the unlock state and enabled to supply power from the external power source to the target device.

The control device is configured to operate at a charging state supplying power to the target device for a second predetermined duration on entering the unlock state. Further, the control device is configured to switch the charger device to the lock state and turn off the light-emitting ring on completion of charging the target device. The control device is further configured to change between the lock state and unlock state on application of the biometric data by the user. The control device further configured to change between the lock state and the unlock state on receiving the fingerprint and the voice from the users. The control device is further configured to reset the charging device on applying the registered fingerprint for a third predefined duration. The control device is further configured to change the charging device to the lock state on disconnection of the charging device from the power source before the second predetermined duration. The control device is further configured to provide one or more feedback indicating successful or unsuccessful operations, including pairing, charging status, or user authentication. The feedback is provided via at least one LED light, the speaker, and the haptic module.

The charging device further comprises an application configured to pair the target device with a mobile device. The application is configured to enable the user to adjust the charging device setting, reset the charging device and unlock the charging device. The application is further configured to collect charging and battery data to advise the user on optimal charging practices.

The above summary contains simplifications, generalizations and omissions of detail and is not intended as a comprehensive description of the claimed subject matter but, rather, is intended to provide a brief overview of some of the functionality associated therewith. Other systems, methods, functionality, features and advantages of the claimed subject matter will be or will become apparent to one with skill in the art upon examination of the following figures and detailed written description.

### BRIEF DESCRIPTION OF THE DRAWINGS

The description of the illustrative embodiments can be read in conjunction with the accompanying figures. It will be appreciated that for simplicity and clarity of illustration, elements illustrated in the figures have not necessarily been drawn to scale. For example, the dimensions of some of the elements are exaggerated relative to other elements. Embodiments incorporating teachings of the present disclosure are shown and described with respect to the figures presented herein, in which:
FIG. 1 exemplarily illustrates a perspective view of a charging device, according to an embodiment of the present invention.
FIG. 2 exemplarily illustrates a user registering biometric data on the charging device, according to an embodiment of the present invention.
FIG. 3 exemplarily illustrates a perspective view of a second connector integrated with the biometric sensor, according to one embodiment of the present invention.
FIG. 4 exemplarily illustrates a perspective view of the second connector integrated with the biometric sensor, according to another embodiment of the present invention.
FIG. 5 is a table that outlines the steps for user registration, and unlocking, locking, charging, and resetting the charging device, according to an embodiment of the present invention.

### DETAILED DESCRIPTION OF EXAMPLE EMBODIMENTS

A description of embodiments of the present invention will now be given with reference to the Figures. It is expected that the present invention may be embodied in other specific forms without departing from its spirit or essential characteristics. The described embodiments are to be considered in all respects only as illustrative and not restrictive.

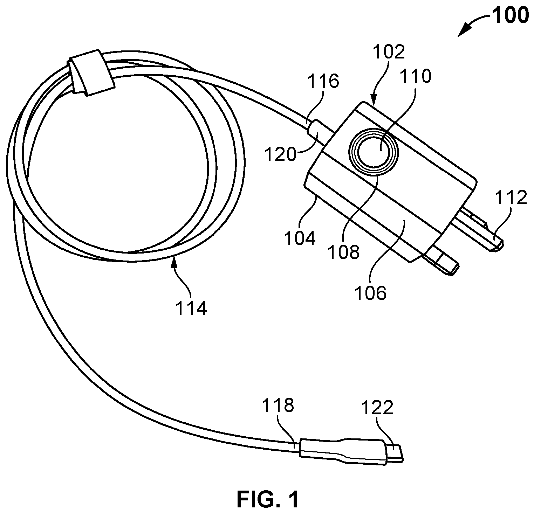

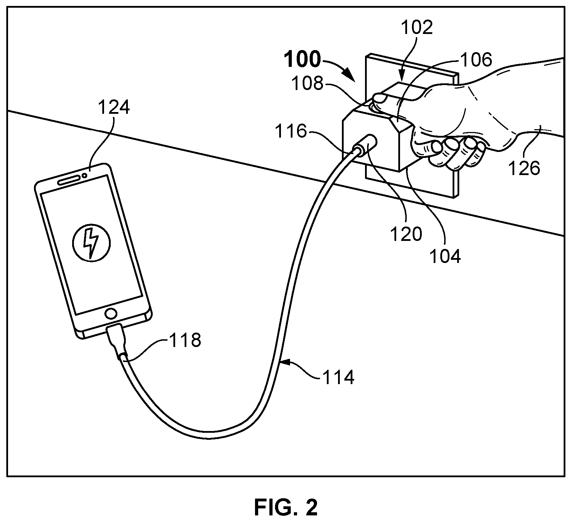

Referring to FIG. 1 and FIG. 2, a charging device 100 comprises a housing 102. In one embodiment, the housing 102 comprises a lower portion 104 and an upper portion 106 disposed over the lower portion 104. The upper portion 106 comprises an aperture 108. Further, the housing 102 is made of at least one fire-retardant polycarbonate (PC) material or a blend of a polycarbonate (PC) material and an acrylonitrile-butadiene-styrene material. The housing 102 could be a matte or glossy finish depending on aesthetic requirements.

The charging device 100 further comprises one or more biometric sensors 110. The biometric sensor 110 is disposed within the aperture 108 of the upper portion 106. The biometric sensor 110 includes, but not limited to, a fingerprint sensor, a capacitive sensor, and an optical sensor. Further, the biometric sensor 110 is configured to capture at least one biometric data from at least one user 126. The biometric data includes, but not limited to, a fingerprint data, a voice data, and a face data. The charging device 100 further comprises a microphone or a speaker to capture voice data. The biometric sensor 110 covers approximately 10-15 mm² of the upper portion 106 of the housing 102. Further, the biometric sensor 110 is configured to complete registration and recognition of biometric data within less than one second under normal operating conditions. The biometric sensor 110 is sealed using a gasket. The gasket is configured to provide protection to the biometric sensor 110 from moisture and dust. The gasket is made of a resin material.

For example, the fingerprint sensor positioned on the upper portion 106 of the housing 102 remains accessible when the charging device 100 is plugged into an external power source. The fingerprint sensor is used to verify the biometric data of the user 126 for purposes including authentication, child lock, usage permissions, or logging data of the user 126. Further, the biometric sensor 110 comprises an integrated electrostatic discharge (ESD) protection module. The integrated Electrostatic Discharge (ESD) protection module is configured to safeguard the biometric sensor 110 from electrostatic discharges.

The charging device 100 further comprises at least one light-emitting ring. The light-emitting ring is configured to encircle the biometric sensor 110. The light-emitting ring comprises one or more light-emitting diodes. The light-emitting ring is configured to emit one or more light patterns. The light-emitting ring could be a red, green, and blue light-emitting diodes (RGB LED). The light-emitting ring is configured to indicate a registration the user 126, one or more feedback on the success or failure of biometric data registration, a charge state, a lock state, and an unlock state. The light-emitting ring is configured to indicate the authentication status of the user 126 and/or provide interactive status or menu/navigation feedback. The light-emitting ring is further configured to provide visual feedback indicating successful or failed fingerprint scans. The light-emitting ring is configured to emit a different light color, or a different light pattern to indicate different states of the charging device 100. The change of state includes unlock state, lock state, charging state, reset of the charging device 100, and registration of the user 126.

The charging device 100 further comprises at least one first connector 112. The first connector 112 extends from the housing 102 configured to connect to an external power source. The first connector 112 is a modular, exchangeable plug component configured to accommodate different regional plug standards. The modular, exchangeable plug piece is detachably connected to the housing 102. The different regional plug standards include, but not limited to, European Union (EU), United states (US), United Kingdom (UK), and others. Further, the final assembly of the first connector 112 is secured to the housing 102 using ultrasonic welding. The ultrasonic welding ensures that the first connector 112 is securely affixed at the factory level which prevents the user 126 from swapping the first connector 112. The external power source provides alternating current (AC) power and is configured to operate with a voltage range of 100-240 VAC (nominal) at a frequency of 50/60 Hz. The external power source delivers an input current of up to 1 ampere (A). The selection of the external power source is based on the required output and compliance with local regulations. Furthermore, the power factor of the external power source meets applicable safety and regulatory standards.

The charging device 100 further comprises a cord 114. The cord 114 comprises a proximal portion 116 and a distal portion 118 opposite to the proximal portion 116. The proximal portion 116 of the cord 114 is attached to the lower portion 104 of the housing 102. The cord 114 comprises a length of 1 or 2 meters. The cord 114 could also be customizable to suit specific requirements.

The charging device 100 further comprises a cord grip 120 that connects the housing 102 to the cord 114. The cord grip 120 is configured at the lower portion 104 of the housing 102 over the cord 114. The cord grip 120 extends over at least a portion of the cord 114. The cord grip 120 is configured to protect the cord 114 from stress and damage at the proximal portion 116 of the cord 114 connected to the lower portion 104. The cord grip 120 is an integrated plastic rib structure that helps to prevent pull-out or bending damage. Further, the cord grip 120 is a custom-molded strain relief configured at the housing 102 to ensure durability and a secure mechanical connection.

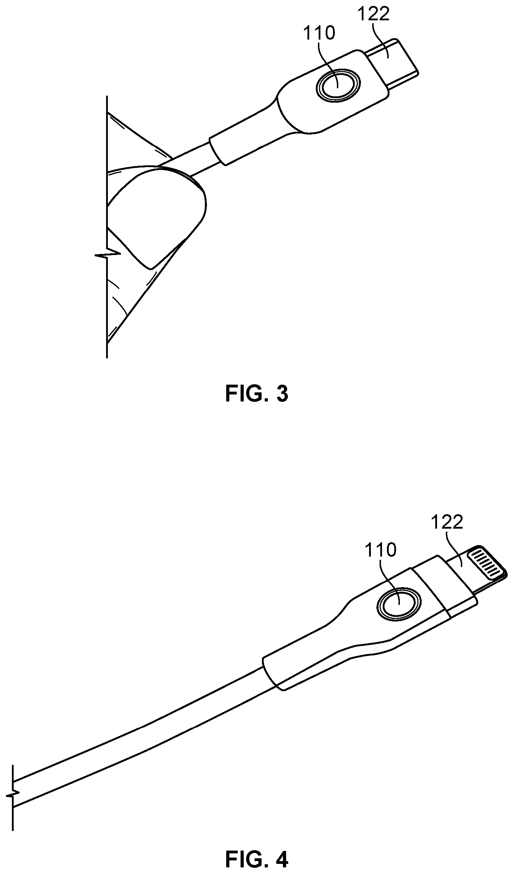

The cord 114 extends from the housing 102 terminates at a second connector 122. The proximal portion 116 of the cord 114 extends from the lower portion 104 and terminates at the second connector 122 at the distal portion 118 of the cord 114. The second connector 122 is configured to connect to at least one target device 124. The target device 124 includes, but not limited to, a phone, a tablet, a modern notebook, handheld devices, and a device that requires 30W of power. Further, the second connector 122 is configured to provide an output power supply for recharging the target device 124. FIG. 3 and FIG. 4 exemplarily illustrates a perspective view of a second connector 122 integrated with the biometric sensor 110, according to one embodiment of the present invention. Referring to FIG. 3 and FIG. 4, further, the second connector 122 includes, but not limited to, a universal serial bus (USB) Type-C connector and an apple lightning connector. The second connector 122 provides a maximum output power of 30 Watts (W). Further, the second connector 122 comprises fixed Power Delivery (PD) profiles, including a Power Data Object (PDO) and an Augmented Power Data Object (APDO).

The PDO defines the power delivery capabilities of a universal serial bus power delivery (USB PD) source. The PDO are 5 V / 3 A (15 W), 9 V / 3 A (27 W), 12 V / 2.5 A (30 W), 15 V / 2 A (30 W), and 20 V / 1.5 A (30 W). The APDO are extensions of PDO configured for a programmable power supply (PPS). The PPS includes a 5 V program, a 9 V program, a 15 V program, and a 20 V program that is within the 30 W limit. The charging device 100 is configured to support multiple charging protocols, including at least one of standard power delivery protocols, fast charging protocols, or adaptive charging protocols. The charging device 100 is compatible with various charging protocols including USB PD 2.0 and 3.0, PPS, Quick Charge (QC) 2.0, 3.0, and 3.0+, Turbo Charge with 27 W, Fast Charge Protocol (FCP) / Super Charge Protocol (SCP) / High Voltage Super Charge Protocol (HVSCP) (including 10 V SCP), Adaptive Fast Charging (AFC), USB battery charging specification 1.2 (BC1.2) for dedicated charging port (USB BC1.2 DCP), and Apple 2.4 A.

The charging device 100 further comprises a control device in communication with the first connecter 112, the light-emitting ring, and the biometric sensor 110. The control device comprises one or more electronic components. The electronic component comprises an alternating current (AC) to direct current (DC) conversion component. The AC-DC conversion component is configured to convert the received AC power to DC power to recharge the target device 124. The AC-DC conversion is configured to switch the power supply design with power factor correction. The electronic component further comprises a controller, which includes a single chip configured to manage power delivery through Universal Serial Bus Power Delivery (USB PD) and Programmable Power Supply (PPS) protocols. Further, the controller includes a multi-protocol fast-charging controller.

The electronic components further comprise a sensor controller configured to manage the biometric data received from the user 126. Further, the sensor controller comprises Standalone or integrated microcontroller to handle biometric data. The Fingerprint sensor flex cable or wiring is routed through guides to the main PCB connector. The electronic components further comprise an electromagnetic Interference (EMI) filter. The EMI filter includes inductors or capacitors configured to suppress noise and ensure the charging device 100 meets an Electromagnetic Compatibility (EMC) requirement. The electronic component further comprises one or more thermal pads configured to prevent overheating of the charging device 100. The thermal pads are required for thermal management of power metal-oxide-semiconductor field-effect transistor (MOSFET), diodes, or other high-heat components.

The electronic components further comprise an Internet of things (IoT) component and a Bluetooth to store and compare the biometric data of the users 126 with the registered biometric data. The electric components further comprise a wireless fidelity (Wi-Fi). In one embodiment, the charging device 100 is configured to pair with a smartphone via the loT or the Bluetooth or the wi-fi. In one embodiment, the charging device 100 is paired with the smart phone via an application. The application is configured to enable the user to adjust the charging device 100 setting and eliminates the need for manual adjustment on the charging device 100. The application is configured to enable the user 126 to reset and unlock the charging device 100 to charge the target device 124. The application is configured to collect charging and battery data and advise the user 126 on optimal charging practices to maximize the life expectancy of the charging device 100. The smart device is configured to store the data related to the charging device 100 and adjust the settings of the charging device 100. Further, the charging device 100 is paired with the target device 124 via the application. The target device 124 is configured to allow the user 126 to locate the charging device 100 via the application. The target device 124 sends an alarm to the paired charging device 100. For example, the target device 124 could be a smart device. The electronic component further comprises an internal temperature sensor configured for thermal management and to prevent overheating of the charging device 100.

The control device comprises a printed circuit board (PCB) assembly. The printed circuit board (PCB) assembly comprises one or more high-voltage components configured to perform input power conversion, and one or more low-voltage components. The low-voltage components are configured to perform power output regulation, charging protocol management, and management of biometric sensor 110 and light-emitting ring. The printed circuit board (PCB) disposed within the housing 102 and fastened using one or more fasteners. The fasteners could be a screw or a snap-fit standoff. The high voltage portion connected to the first connector 112 is configured to receive AC input for power conversion. The low voltage portion is connected to the cord 114 to provide the DC power for charging the target device 124. The PCB layout is configured to maintain the required creepage and clearance distances per safety standards especially across isolation barriers.

The control device is configured to enable at least one user 126 to register the biometric data. The registered biometric data is stored in a memory of the control device. The steps involved in registering biometric data are as follows. The control device enables the user 126 to apply a fingerprint for a first predefined number of times for a predetermined duration each time. The predetermined duration could be one second. Further, the control device enables the light-emitting ring to flash a first color to confirm successful registration and returns to a second color for each new print. For example, the first color could be green and the second color could be orange. Upon successfully registering the fingerprint, the control device enables the light-emitting ring to emit at least one light pattern. Subsequently, the light-emitting ring turns to a third color indicating the device is ready to charge. For example, the third color could be red.

The control device is further configured to enable the charging device 100 to change between a lock state and an unlock state. During the unlock state, the control device enables the charging device 100 to supply power to the target device 124 from the external power source. During the lock state, the control device prevents the charging device 100 from supplying power to the target device 124. The control device is configured to receive the biometric data of the user 126 to enable the charging device 100 to operate in the unlock state. The control device is configured to compare the received biometric data with the registered biometric data to authenticate the received biometric data. Upon authentication of the received biometric data, the charging device 100 is changed to the unlock state and enabled to supply power from the external power source to the target device 124.

On entering the unlock state, the control device is configured to operate at a charging state supplying power to the target device 124 for a second predetermined duration. For example, the second predetermined duration could be nine hours. Further, the control device is configured to switch the charger device to the lock state and turn off the light-emitting ring on completion of charging the target device 124. The charging device 100 could be a 30 Watts (W) power delivery (PD) wall charger having the fingerprint sensor.

The control device is further configured to change between lock state and unlock state on application of the biometric data by the user 126. The control device is further configured to change between lock state and unlock state on application of the fingerprint by the user 126. The control device further configured to change between the lock state and the unlock state on receiving the voice from the users 126. The control device is further configured to reset the charging device 100 on applying the registered fingerprint for a third predefined duration. The control device is further configured to change the charging device 100 to the lock state on disconnection of the charging device 100 from the power source before the second predetermined duration.

The charging device 100 is configured to operate within a temperature range of 0 °C to 40°C. Additionally, the charging device 100 is configured to be stored within a temperature range of -20 °C to 60 °C. Further, the charging device 100 is supported by various regional certifications including underwriters laboratories (UL/cUL), Conformite Europeenne (CE), Federal Communications Commission (FCC), Restriction of Hazardous Substances (RoHS), and Registration, Evaluation, Authorisation, And Restriction of Chemicals (REACH). Additionally, the charging device 100 comprises a plastic enclosure that typically meets a UL 94 V-0 flame retardant rating.

The charging device 100 further comprises an overvoltage, an overcurrent, and a short-circuit protection to ensure safe and reliable operation. Further, the charging device 100 comprises at least one interface configured to facilitate firmware updates of the charging device 100. Further, the firmware upgrades could be efficiently managed through a hidden port or an over-the-air (OTA) approach, depending on the final hardware design. The firmware update capability includes a hidden debugging or maintenance port for in-factory firmware updates if the fingerprint sensor logic or charging protocol requires modifications. Additionally, the charging device 100 is verified for laptop charging which supports ultrabooks or smaller notebooks requiring up to 30 W input which is a versatile option for travelers.

The charging device 100 comprises various quality control and testing processes. The quality control and testing process includes an electrical safety test, a functional test, and a cable pull test. The functional test comprises voltage and current checks, a fingerprint sensor read test, and a light-emitting ring indicator test. The electrical safety test involves hi-pot, insulation, and grounding tests to verify compliance with safety standards. The functional test verifies the PD handshake, QC, and other protocols to confirm compatibility with phones, tablets, and notebooks. For biometric performance, a fingerprint sensor test is conducted on a sample to evaluate registration or recognition speed and accuracy. Additionally, the cable pull test is performed to ensure compliance with cable strain relief.

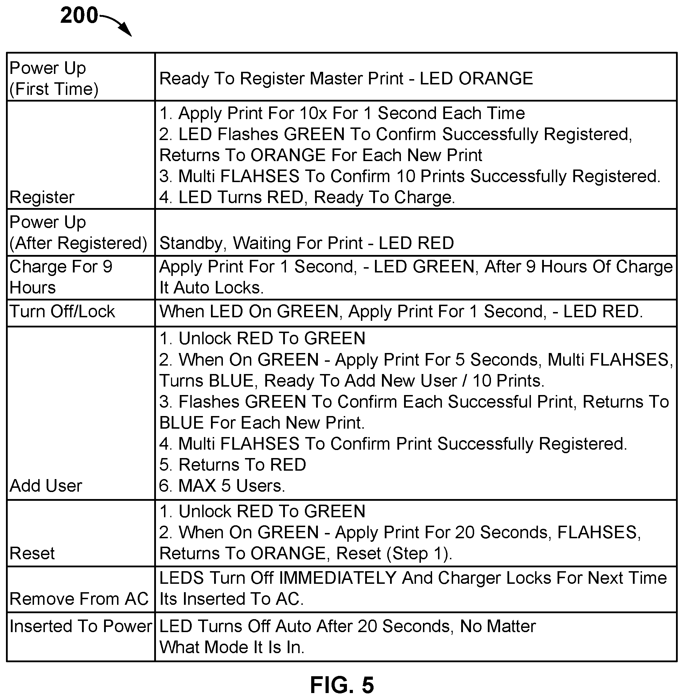

FIG. 5 is table 200 that outlines the steps for user 126 registration, unlocking, locking, charging, and resetting the charging device 100, according to an embodiment of the present invention. The power up is indicated by the light-emitting ring flashing orange color that indicates the charging device 100 is ready to register a master print. In one embodiment, a method for registering the user 126 to use the charging device 100 is disclosed. The control device is configured to enable the user 126 to register biometric data by applying a print ten times for one second each time. Further, the control device is configured to confirm each successfully registered biometric data by the light-emitting ring flashing the first color. The first color could be the green. Once the registration is successful, the light-emitting ring turns to the second color for registering a new biometric data of the user 126. The second color could be the orange. Further, the control device is configured to confirm the successful registration of the predefined number of biometric data by enabling the light-emitting ring to emit at least one light pattern. Subsequently, the control device is configured to turn the light-emitting ring to the third color indicating the charging device 100 is ready to charge the target devices 124. For example, the third color could be the red. Once the user 126 is registered, the power up is indicated with the light-emitting ring flashing a red color that indicates the charging device 100 is waiting to receive the new biometric data.

The control device receives biometric data to unlock the charging device 100 when in standby mode, indicated by a red light. Upon successful unlocking, the light changes from red to green, and the device 100 is ready for charging for a period of nine hours, after which it auto-locks; The control device is configured to turn off or lock the charging device 100 by applying a print when the light-emitting ring is green. The light-emitting ring subsequently turns red.

The control device enables to add an additional user 126 by unlocking the device from red to green, and then applying a print for five seconds to initiate the user 126 addition process. The light-emitting ring flashes multiple times and turns blue, indicating readiness to add a new user, and confirms each successful print registration by flashing green before returning to blue for each new print, with multiple flashes indicating successful registration and a maximum of five users;

The control device is configured to reset the charging device 100 by unlocking from red to green and applying a print for twenty seconds, causing the light-emitting ring to flash and return to orange, indicating a reset to the initial registration state. The control device is configured to automatically turn off the light-emitting ring when removed from AC power, locking the charging device 100, and turning off the light-emitting ring 20 seconds after being inserted into a power source regardless of the charging device's 100 mode. The control device is further configured to provide one or more feedback indicating successful or unsuccessful operations, including pairing, charging status, or user authentication. The feedback is provided via at least one LED light, the speaker and a haptic module. The speaker is configured to deliver audible feedback and the haptic module is configured to deliver vibration-based feedback.

Advantageously, the charging device 100 with a fingerprint sensor provides a secure and efficient charging solution for mobile devices and select lightweight notebooks. The charging device 100, integrated with a fingerprint sensor, enhances user 126 security by enabling biometric authentication and restricting unauthorized access. Additionally, the RGB LED light ring offers clear visual feedback for fingerprint recognition and charging status, improving user 126 interaction and convenience. The charging device 100 ensures compatibility with a wide range of devices, thereby reducing the need for multiple chargers. Furthermore, the compact and modular design of the charging device 100 supports easy regional adaptability with interchangeable plug modules. The robust safety features of the charging device 100, including overvoltage and thermal management, ensure reliable and safe operation.

The charging device 100 further comprises at least one interface configured to facilitate firmware updates of the charging device 100. The firmware update capability includes a hidden debugging or maintenance port for in-factory firmware updates if the fingerprint sensor logic or charging protocol requires modifications. Further, the firmware upgrades could be efficiently managed through a hidden port or an over-the-air (OTA) approach, depending on the final hardware design. Ensuring safety and regulatory compliance, the charger meets essential standards such as IEC 62368-1 for IT equipment power supplies and adheres to electromagnetic compatibility requirements across various regions. The charging device 100 could be a phone charger or an electric car charger. The present invention can also be used for laptop charging, supporting ultrabooks or smaller notebooks that require up to 30 W input, making it a versatile option for travelers. The charging device 100 provides a single-charger solution for both mobile phones and lightweight laptops. Further, the charging device 100 could be customized according to the branding and functionality, including housing 102 color, cable type (USB-C or Lightning), and brand logo.

In one embodiment, the charging device comprises one or more biometric sensors configured to enhance the security and user interaction of the device. These biometric sensors may include, but are not limited to, fingerprint scanners, facial recognition modules, or other user authentication mechanisms. The sensors are integrated into the charging device such that they can authenticate the identity of the user during charging or upon device interaction. The biometric sensors are further configured to detect the removal of a mobile device from the charging device. Upon detecting such removal, either via integrated sensing mechanisms, biometric disengagement, or through near-field communication (NFC) or NFC-like technology, the charging device initiates a predefined security protocol in communication with the mobile device. Additionally, the charging device is operatively connected to a companion mobile application that allows users to configure security settings, including the selection of specific applications to be locked under predefined or manual conditions.

This security protocol may comprise one or more of the following actions: (a) Locking or disabling access to selected applications: Applications deemed sensitive (e.g., finance, corporate communication, or personal data apps) can be automatically locked when the mobile device is removed from the charger. Through the companion mobile application, the user can manually select which applications are to be locked and may optionally trigger the locking action with a tap within the app interface, allowing for dynamic user control over the security behavior. This ensures that if the device is removed without user authentication, access to critical applications is denied until proper re-authentication occurs. (b) Activating a device tracking or "Find My Phone" function: Upon unauthorized or unexpected removal of the device, the system may trigger a location-tracking service or issue an alert to the associated user account, aiding in rapid recovery or theft deterrence. (c) Requiring biometric authentication to restore access: To regain access to restricted functions, the user may be prompted to provide biometric authentication, either through the charging device itself (if the mobile device is reconnected) or directly on the mobile device. This reinforces device-level security and ensures that only authorized users can access protected content or features after disconnection. This configuration provides an advanced level of integrated security, linking biometric authentication with device proximity and user actions, and adds further control through a companion app, making it especially beneficial for public, shared, or high-security environments.

While the disclosure has been described with reference to exemplary embodiments, it will be understood by those skilled in the art that various changes may be made and equivalents may be substituted for elements thereof without departing from the scope of the disclosure. In addition, many modifications may be made to adapt a particular system, device or component thereof to the teachings of the disclosure without departing from the essential scope thereof. Therefore, it is intended that the disclosure not be limited to the particular embodiments disclosed for carrying out this disclosure, but that the disclosure will include all embodiments falling within the scope of the appended claims. Moreover, the use of the terms first, second, etc. do not denote any order or importance, but rather the terms first, second, etc. are used to distinguish one element from another.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The description of the present disclosure has been presented for purposes of illustration and description, but is not intended to be exhaustive or limited to the disclosure in the form disclosed. Many modifications and variations will be apparent to those of ordinary skill in the art without departing from the scope of the disclosure. The described embodiments were chosen and described in order to best explain the principles of the disclosure and the practical application, and to enable others of ordinary skill in the art to understand the disclosure for various embodiments with various modifications as are suited to the particular use contemplated.

## Claims

1. A charging device (100), ***characterized by**:*
a housing (102);
one or more biometric sensors (110) disposed at an upper portion (106) of the housing (102), wherein the biometric sensor (110) is configured to capture at least one biometric data of at least one user (126), wherein the biometric data includes at least one of fingerprint data, voice data, and facial data;
at least one light-emitting ring is positioned to encircle the biometric sensor (110), wherein the light-emitting ring comprises one or more light-emitting diodes, wherein the light-emitting ring is configured to emit one or more light patterns;
at least one first connector (112) extends from the housing (102) configured to connect to an external power source;
a cord (114) extends from the housing (102) terminates with a second connector (122), wherein the second connector (122) integrated with another biometric sensor (110), is configured to connect to at least one target device (124), and
a control device in communication with the first connecter (112), the light-emitting ring, and the biometric sensor (110), wherein the control device is configured to:
enable at least one user (126) to register the biometric data, wherein the registered biometric data is stored in a memory of the control device,
enable the charging device (100) to change between a lock state and an unlock state, wherein, during the unlock state, the control device enables the charging device (100) to supply power to the target device (124) from the external power source, and wherein, during the lock state, the control device prevents the charging device (100) from supplying power to the target device (124),
receive the biometric data of the user (126) to enable the charging device (100) to operate in the unlock state, and
compare the received biometric data with the registered biometric data to authenticate the received biometric data, wherein, on authentication of the received biometric data, the charging device (100) is changed to the unlock state and enabled to supply power from the external power source to the target device (124).

2. The charging device (100) of claim 1, further comprises a cord grip (120) connects the housing (102) to the cord (114), wherein the cord grip (120) extends over at least a portion of the cord (114), and comprises at least one of a microphone and a speaker to capture voice data.

3. The charging device (100) of claim 1, wherein the control device comprises one or more electronic components comprising an alternating current (AC) to direct current (DC) conversion component, a sensor controller, an electromagnetic Interference (EMI) filter, a thermal management module including one or more thermal pads, an Internet of things (IoT) component, a wireless fidelity (Wi-Fi), and a Bluetooth.

4. The charging device (100) of claim 1, wherein the housing (102) is made of at least one fire-retardant polycarbonate (PC) material, and a blend of a polycarbonate (PC) material and an acrylonitrile-butadiene-styrene material, and the housing (102) comprises at least one aperture (108) and the biometric sensor (110) is disposed within the aperture (108), and the biometric sensor (110) is sealed using a gasket.

5. The charging device (100) of claim 1, wherein the registering of biometric data involves:
enabling the user (126) to apply a fingerprint for a predefined number of times for a first predetermined duration each time, wherein the light-emitting ring flashes a first color to confirm successful registration and returns to a second color for each new print, and
upon successfully registering the fingerprint, enabling the light-emitting ring to emit at least one light pattern and subsequently turns to a third color, indicating the device is ready to charge.

6. The charging device (100) of claim 1, on entering the unlock state, configured to operate at a charging state supplying power to the target device (124) for a second predetermined duration, and wherein, on completion of charging the target device (124), the control device is configured to switch the charger device (100) to the lock state and turn off the light-emitting ring.

7. The charging device (100) of claim 1, wherein the control device is configured to:
change between lock state and unlock state on application of the biometric data by the user (126);
reset the charging device (100) on applying the registered fingerprint for a third predefined duration;
change the charging device (100) to the lock state on disconnection of the charging device (100) from the power source before the second predetermined duration, and
provide feedback indicating successful or unsuccessful operations of the charging device (100), including pairing, charging status, or user authentication, wherein the feedback is provided via at least one LED light, the speaker, and a haptic module.

8. The charging device (100) of claim 1, wherein the light-emitting ring is configured to emit a different light color, or a different light pattern to indicate different states of the charging device (100), wherein the states of the charging device (100) include unlock state, lock state, charging state, reset of the charging device (100), and registration of the user (126).

9. The charging device (100) of claim 1, wherein the biometric sensor (110) comprises a fingerprint sensor, and at least one of a capacitive sensor and an optical sensor.

10. The charging device (100) of claim 1, wherein the biometric sensor (110) comprises an integrated Electrostatic Discharge (ESD) protection module configured to safeguard the sensor from electrostatic discharges.

11. The charging device (100) of claim 1, wherein the first connector (112) is a modular, exchangeable plug component configured to accommodate different regional plug standards, wherein the modular, exchangeable plug piece is detachably connected to the housing (102).

12. The charging device (100) of claim 1, further comprises at least one interface configured to facilitate firmware updates of the charging device (100), and wherein the charging device (100) is configured to support multiple charging protocols, including at least one of standard power delivery protocols, fast charging protocols, or adaptive charging protocols.

13. The charging device (100) of claim 1, wherein the control device comprises a printed circuit board (PCB) assembly comprising one or more high-voltage components configured to perform input power conversion, and one or more low-voltage components configured to perform power output regulation, charging protocol management, and management of biometric sensor (110) and light-emitting ring.

14. The charging device (100) of claim 1, is configured to pair with a mobile device to enable the user (126) to adjust settings of the charging device (100), reset the charging device (100) and unlock the charging device (100), wherein the mobile device is further configured to collect charging and battery data to advise on optimal charging practices.

15. The charging device (100) of claim 1, wherein the one or more biometric sensors (110) are configured to detect removal of the mobile device from the charging device (100), and wherein upon such removal, the charging device (100) communicates with the mobile device and/or a companion mobile application to initiate a security protocol comprising at least one of:
(a) locking or disabling access to one or more user-selected applications, as configured through the companion application and optionally triggered manually via a tap within the app interface;
(b) activating a device tracking or "Find My Phone" function to locate the mobile device or notify the user (126) of unauthorized removal; or
(c) requiring biometric authentication, either through the charging device (100) or the mobile device, to restore access to restricted functions.
